(19) Europäisches Patentamt
European Patent Office
Office européen des brevets

(11) **EP 2 938 200 B1**

(12) **FASCICULE DE BREVET EUROPEEN**

(45) Date de publication et mention de la délivrance du brevet:
**19.04.2017 Bulletin 2017/16**

(21) Numéro de dépôt: **13814989.3**

(22) Date de dépôt: **27.12.2013**

(51) Int Cl.:
*A23L 23/10* (2016.01)    *A23C 9/18* (2006.01)

(86) Numéro de dépôt international:
**PCT/EP2013/078041**

(87) Numéro de publication internationale:
**WO 2014/102316 (03.07.2014 Gazette 2014/27)**

(54) **PROCÉDÉ DE TRAITEMENT DE PRODUITS COMPACTÉS, ET DISPOSITIF DE TRAITEMENT ASSOCIÉ**

VERFAHREN ZUR VERARBEITUNG GEPRESSTER PRODUKTE UND VERARBEITUNGSVORRICHTUNG

METHOD FOR PROCESSING COMPACTED PRODUCTS, AND ASSOCIATED PROCESSING DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2012 FR 1262920**

(43) Date de publication de la demande:
**04.11.2015 Bulletin 2015/45**

(73) Titulaires:
• **Eurotab**
**42170 Saint Just Saint Rambert (FR)**
• **Sarl Albret**
**38530 Pontcharra (FR)**

(72) Inventeurs:
• **SOQUET, Valérie**
**F-69100 Villeurbanne (FR)**
• **BRANLARD, Paul**
**F-69005 Lyon (FR)**
• **CLEDAT, Jean Bernard**
**F-38530 Pontcharra (FR)**
• **CLEDAT, Magali**
**F-73230 Barby (FR)**

(74) Mandataire: **Regimbeau**
**139, rue Vendôme**
**69477 Lyon Cedex 06 (FR)**

(56) Documents cités:
**EP-A1- 1 769 682    WO-A1-2013/001052**
**US-A- 2 897 084**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

DOMAINE DE L'INVENTION

La présente invention concerne un procédé de traitement de produits compactés, préférentiellement de produits compactés à base de poudre, et un dispositif de traitement associé.

ETAT DE LA TECHNIQUE

Les produits compactés sous forme de tablettes sont souvent destinés à être dissous dans un liquide aqueux. A cet égard, ils ne doivent pas être trop compacts pour pouvoir être dissous dans le liquide dans un temps acceptable avec l'application. Ces produits compactés doivent toutefois présenter une résistance suffisante pour pouvoir être manutentionnés sans être abimés, notamment pendant les phases de transport au cours desquels les produits compactés subissent de nombreux chocs pouvant les endommager.

Parmi les différentes solutions existantes pour former des produits compactés présentant à la fois une vitesse de dissolution satisfaisante et une résistance mécanique suffisante, l'une des solutions consiste à préparer un compact présentant une faible cohésion et à appliquer un traitement spécifique audit compact pour qu'il présente une structure coeur/croute. Plus précisément le compact est traité pour former une structure avec un coeur conservant la cohésion réduite - et permettant donc une dissolution rapide du produit compacté - et une croute entourant le coeur et étant plus résistante pour augmenter la résistance globale du produit compacté.

Pour former cette structure coeur/croute, il peut par exemple être exercé un traitement de surface humidification puis séchage sur un compact venant d'être formé par un procédé de compaction traditionnel. La première étape du traitement de surface est une humidification de la surface externe du compact, de manière à solubiliser la matière sur une faible épaisseur. Dans une deuxième étape, la pastille humidifiée est séchée de manière à éliminer l'eau ajoutée à l'étape d'humidification. Cela permet de créer une pastille présentant un coeur poreux et une croute durcie.

Un exemple de réalisation d'un tel traitement est présenté par exemple dans la demande PCT publiée le 23 août 2012 sous la référence WO2012110742. Dans ce document, il est proposé d'effectuer l'humidification en plaçant le compact dans un tunnel de vapeur ou par pulvérisation d'eau sur le compact. Pour le séchage, il est proposé d'utiliser des techniques telles que le four à air chaud, le rayonnement IR, ou le séchage par micro-ondes. Les processus de traitement proposés sont toutefois complexes à mettre en oeuvre et pas adaptés à un déploiement industriel. Ils ne sont en outre pas applicables à n'importe quel type de pastilles et peuvent en effet venir dégrader son intégrité au cours du traitement.

Le brevet US 2 897 084 (PEEBLES DAVID D.) publié le 28 juillet 1959 décrit un procédé pour la production d'agglomérats de café, ledit procédé comprenant des étapes successives d'humidification et de séchage des agglomérats de café. Lors de l'étape de séchage, un flux d'air permet à la fois de sécher et de mettre en lévitation les agglomérats pour faciliter leur déplacement.

La demande de brevet EP 1 769 682 A1 (MEIJI DAIRIES CORP) publiée le 4 avril 2007 décrit quant à elle un procédé de traitement d'un produit compacté comprenant les étapes d'humidification puis de séchage du produit compacté. L'étape d'humidification est réalisée avec une chambre d'humidification, un spray ou par vapeur, tandis que l'étape de séchage est faite par mise en contact avec de l'air sec, par exemple de l'air sec chauffé.

Un but de la présente invention est de proposer un procédé de traitement d'un produit compacté de toute nature, présentant une solubilité dans l'eau, permettant de renforcer sa résistance tout en conservant sa vitesse de dissolution.

Plus précisément un but de la présente invention est de proposer un procédé de traitement de surface permettant une humidification puis un séchage homogènes d'un produit compacté, et applicable à l'échelle industrielle.

Encore un but de la présente invention est de proposer un procédé de traitement par humidification puis séchage d'un produit compacté pouvant être mis en oeuvre simplement, rapidement, tout en assurant l'intégrité de la pastille.

EXPOSE DE L'INVENTION

A cette fin, on propose un procédé de traitement d'un produit compacté, comprenant les étapes suivantes :

- Humidification du produit compacté, puis
- Séchage du produit compacté humidifié,

les étapes d'humidification et de séchage étant réalisées par application d'un flux d'air permanent et continu vers le produit compacté ayant été préalablement placé dans une enceinte de traitement, le flux d'air étant contrôlé au cours du traitement pour effectuer une humidification du produit compacté puis pour effectuer un séchage du produit compacté, le flux d'air étant en outre contrôlé pour mettre et maintenir le produit compacté en sustentation dans l'enceinte de traitement pendant l'ensemble du traitement.

Un tel procédé permet en particulier d'éviter tout marquage du produit compacté qui viendrait altérer son intégrité.

Des aspects préférés mais non limitatifs de ce procédé de traitement, pris seuls ou en combinaison, sont les suivants :

- le flux d'air est contrôlé pour exercer sur le produit compacté une surpression ∆P telle que :

$$\Delta P \geq \frac{M * g}{S}$$

où M est la masse du produit compacté, g est l'accélération de la pesanteur et S est la surface de portance du produit compacté par rapport au flux d'air.

- le flux d'air est généré par soufflage d'air à travers des orifices d'une grille, le flux d'air étant contrôlé pour exercer sur le produit compacté une surpression ∆P telle que :

$$\Delta P \geq \frac{M * g}{S_P}$$

où $S_P$ est la surface du produit compacté projetée sur la grille.

- le flux d'air est généré par soufflage d'air à travers des orifices d'une grille, le flux d'air étant contrôlé pour exercer sur le produit compacté une surpression ∆P telle que :

$$\Delta P \geq \frac{M * g}{S_C}$$

où $S_C$ est la surface du produit compacté en contact avec la grille en l'absence du flux d'air.

- on utilise une grille ayant une forme adaptée à la forme du produit compacté.

- le flux d'air est contrôlé pour exercer sur le produit compacté une surpression ∆P telle que :

$$\Delta P \geq 1{,}2 * \frac{M * g}{S_C}$$

- le flux d'air est contrôlé pour exercer sur le produit compacté une surpression ∆P telle que :

$$\Delta P \leq 1{,}6 * \frac{M * g}{S_C}$$

- le flux d'air est réparti sur l'ensemble de la surface du produit compacté.

- le flux d'air est appliqué selon une unique direction d'application, et dans lequel on utilise des convecteurs d'air pour répartir le flux d'air vers la surface du produit compacté opposée à la direction d'application du flux d'air.

- l'humidification par flux d'air est effectuée par condensation de vapeur d'eau, et le séchage par flux d'air est effectué par convection.

- le flux d'air est contrôlé pour avoir une humidité absolue plus importante pendant l'étape d'humidification que pendant l'étape de séchage.

- le flux d'air est contrôlé pour avoir une température plus importante ou identique pendant l'étape de séchage que pendant l'étape d'humidification.

- pendant l'étape d'humidification, le flux d'air a une humidité absolue comprise entre 20 g/kg et 500 g/kg, de préférence comprise entre 50 g/kg et 300 g/kg.

- pendant l'étape d'humidification, le flux d'air a une température comprise entre 40°C et 100°C, de préférence comprise entre 60°C et 85°C.

- pendant l'étape d'humidification, le flux d'air a un taux d'humidité relative compris entre 40% et 100%, et de manière préférée compris entre 50% et 80%.

- pendant l'étape de séchage, le flux d'air a une température comprise entre 50°C et 200°C, de préférence entre 60°C et 180°C, plus préférentiellement entre 80°C et 160°C.
- le procédé comprend en outre une étape de refroidissement après l'étape de séchage, le refroidissement étant effectué en maintenant l'application du flux d'air permettant de maintenir le produit compacté en sustentation dans l'enceinte de traitement, le flux d'air utilisé pendant l'étape de refroidissement ayant une température inférieure à la température du flux d'air pendant l'étape de séchage.

On propose en outre un produit compacté à base de poudre susceptible d'être obtenu par un tel procédé de traitement.

On propose également un dispositif de traitement d'un produit compacté par humidification puis séchage, comprenant :

- Une enceinte de traitement dans laquelle le produit compacté à traiter est destiné à être placé ;
- un système d'application d'un flux d'air à l'intérieur de l'enceinte de traitement prévus pour diriger le flux d'air vers le produit compacté ;
- un système de répartition du flux d'air sur l'ensemble de la surface du produit compacté ;
- un système de modification de l'humidité absolue du flux d'air et des moyens de modification de la température du flux d'air.

De préférence, les systèmes d'application du flux d'air sont en outre prévus pour mettre le produit compacté en sustentation, et également pour le maintenir en sustentation.

Des aspects préférés mais non limitatifs de ce dispositif de traitement, pris seuls ou en combinaison, sont les suivants :

- les systèmes d'application du flux d'air comprennent un ventilateur d'air associé à une grille comprenant une pluralité d'orifices de soufflage, les orifices de soufflage représentant 15% à 50% de la surface de la grille, et de préférence 20% à 40%.
- les orifices de soufflage ont un diamètre moyen compris entre 0,5 mm et 2 mm, la distance séparant deux orifices de soufflage adjacents étant comprise entre 1 mm et 2 mm.

## DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 illustre les différentes étapes du procédé de traitement proposé ;
- la figure 2 est une représentation schématique d'un dispositif de traitement pour mettre en oeuvre le procédé de traitement proposé.

## DESCRIPTION DETAILLEE DE L'INVENTION

**Description générale du procédé de traitement**

Le procédé de traitement décrit dans la présente demande est applicable à des produits compactés, appelées également tablettes ou pastilles, qui contiennent au moins un ingrédient (non minoritaire en masse) se présentant sous forme divisée pouvant se dissoudre rapidement au contact de l'eau et reformer une phase solide continue après évaporation de l'eau déposée en surface des tablettes. Ces tablettes peuvent être monocouche ou multicouches, et peuvent avoir une forme tridimensionnelle quelconque.

De manière non limitative, ce procédé est applicable notamment à des tablettes dans le domaine alimentaire, telle que des tablettes de soupe, des tablettes de café soluble, des tablettes de lait, ou un mélange de ces composés.

Le procédé pourrait également être appliqué dans d'autres domaines tels que le domaine cosmétique, pour des tablettes pour la décoloration des cheveux par exemple.

Ce procédé a pour objet de créer un produit compacté ayant une structure coeur/croute à partir d'un compact présentant déjà une certaine cohésion, cette cohésion étant toutefois insuffisante pour que la tablette résiste aux contraintes de transport. On peut par exemple appliquer le procédé de traitement à un compact venant d'être compacté selon les procédés de compaction connus.

Le principe général du traitement proposé est d'appliquer une humidification 10 puis un séchage 20 selon un processus continu. Plus précisément, il est appliqué un traitement de même nature pour effectuer à la fois l'humidification et le séchage, ce qui permet d'assurer un processus continu, simple et rapide.

Ainsi, il est proposé de réaliser les étapes d'humidification et de séchage par application d'un flux d'air permanent et continu vers un produit compacté ayant été préalablement placé dans une enceinte de traitement.

Comme on le verra plus loin, les caractéristiques du flux d'air sont contrôlées au cours du traitement pour réaliser l'humidification du produit compacté puis pour sécher le produit compacté ayant été humidifié.

Tout au long du traitement, le flux d'air est en outre contrôlé pour mettre et maintenir le produit compacté en sustentation 30 dans l'enceinte de traitement. Par sustentation, on entend que le produit compacté est maintenu en équilibre sur un coussin d'air, c'est-à-dire que le produit n'est pas en contact avec un support. Même si les caractéristiques intrinsèques du flux d'air varient au cours du traitement pour effectuer successivement l'humidification et le séchage de la tablette, le flux d'air est appliqué sans discontinuité et en permanence pour que le produit compacté reste en sustentation durant l'ensemble du traitement.

Le fait que le flux d'air mette et maintienne le produit compacté en sustentation pendant les étapes d'humidification et de séchage permet de traiter la totalité de la surface de ce produit compacté sans qu'il ne vienne en contact avec l'une des parois de l'enceinte de traitement. Le produit compacté ne vient notamment pas en contact avec la paroi inférieure de l'enceinte formant le support.

La mise en sustentation de la tablette à traiter permet d'éviter que la tablette n'adhère au support de l'enceinte, ce qui est très avantageux. Cela évite en particulier les problèmes de collage de la pastille sur le support, et donc la perte d'intégrité de la pastille. En effet, même lorsque les supports ont un revêtement téflon, les tablettes sont adhérentes audit support entraînant au minimum un marquage des tablettes, voire une impossibilité de les décoller sans les endommager. En outre, le contact avec le support ne permet pas un traitement uniforme sur la totalité de la surface de la tablette, dégrade son intégrité par le collage de morceaux sur le support et rend le procédé moins robuste du fait de l'encrassement plus ou moins rapide du matériel lors de l'utilisation industrielle.

Il est en outre particulièrement avantageux que le flux d'air maintienne la mise en sustentation tout en opérant l'humidification de la tablette puis le séchage de ladite tablette. Cela permet tout d'abord de simplifier chacune des étapes puisqu'un seul moyen permet de réaliser le traitement de manière efficace, sans endommager ou abîmer la tablette. En outre, le fait que chacune des étapes soit réalisée avec application d'un flux d'air permet d'effectuer l'étape de séchage à la suite de l'étape d'humidification sans interruption de l'application du flux d'air, ce qui permet de gagner en temps de traitement, et en rendement productif associé.

De manière préférée, le flux d'air est réparti sur l'ensemble de la surface du produit compacté pendant toutes les étapes du traitement. Le confinement de l'air de soufflage autour du produit compacté permet d'obtenir une ambiance homogène et assure donc un traitement homogène de l'ensemble de la pastille, de façon très simple, et permet de rendre le traitement très efficace. Par exemple, lorsque l'on applique le flux d'air selon une unique direction d'application vers le produit compacté, on peut utiliser des convecteurs d'air pour répartir le flux d'air vers la surface du produit compacté opposée à la direction d'application du flux d'air.

Les étapes successives d'humidification 10 et de séchage 20 peuvent également être suivies d'une étape de refroidissement 40 de la tablette. De manière préférée, cette étape de refroidissement est également réalisée en maintenant la tablette en sustentation 30 dans l'enceinte de traitement par application du flux d'air.

De manière préférée, le flux d'air utilisé pour le maintien en sustentation pendant l'étape de refroidissement réalise également le refroidissement de la tablette.

## Mise en sustentation

La mise en sustentation de la tablette est fonction de son poids et de sa forme, en particulier de sa surface de portance. Il est précisé ici que la surface de portance est définie comme la section de la portion de la tablette en contact direct avec le flux d'air entrant dans l'enceinte de traitement et appliqué sur la pastille.

La pression de l'air sous la pastille est le paramètre permettant d'assurer la sustentation de la pastille. Pour mettre en sustentation la pastille, il faut appliquer une pression d'air de manière à compenser le rapport entre le poids de la tablette et la surface de portance de la tablette.

Le principe de la mise en sustentation est basé sur la formation d'un coussin d'air constitué par une couche d'air créant, sur les faces opposées de deux objets, la pastille d'une part, la grille d'autre part, des forces de pression d'écartement. Il existe ainsi sous la pastille un coussin d'air statique, c'est-à-dire que le mouvement de l'air dans ce coussin est relativement faible.

De manière préférée, le flux d'air est contrôlé pour exercer sur le produit compacté une surpression $\Delta P$, dite également surpression statique, telle que :

$$\Delta P \geq \frac{M * g}{S}$$

où :

- le produit M*g correspond au poids de la tablette, avec M la masse de la tablette et g l'accélération de la pesanteur, et
- S correspond à la surface de portance de la tablette par rapport au flux d'air entrant dans l'enceinte de traitement.

Il existe une plage de pression préférée pour laquelle la pastille est en sustentation. Cette plage se définit par la pression d'air minimale de sustentation et la pression d'air maximale pour laquelle la tablette est encore dans une position stable. Dans cette plage de fonctionnement la tablette a de préférence une hauteur de sustentation dans une plage comprise entre 0,5 mm et 5 mm, de préférence entre 0,5 mm et 2 mm.

La surpression ∆P se définit comme la différence entre la pression appliquée en amont de l'enceinte de traitement et la pression en aval de l'enceinte de traitement. De manière générale, la pression appliquée en amont de l'enceinte de traitement correspond à la pression en sortie des systèmes d'application du flux d'air. La pression en aval de l'enceinte de traitement correspond à la pression après la tablette à traiter. Cette pression en aval de l'enceinte de traitement dépend de la configuration de cette enceinte de traitement, mais elle est généralement proche de ou égale à la pression atmosphérique.

Selon la phase de traitement de la pastille (humidification, séchage ou refroidissement), les caractéristiques du flux d'air varient (température, humidité, masse volumique). Afin de maintenir la pastille en sustentation tout au long du traitement, la pression d'air sous la pastille est de préférence maintenue constante. C'est donc la pression de l'air au niveau des systèmes d'application du flux d'air qui doit être ajustée pour chaque phase.

De manière préférée, le flux d'air est généré en utilisant un moyen de ventilation, tel qu'un ou plusieurs ventilateurs, couplé à une grille de soufflage perforée dont les orifices de perforation influencent la répartition de l'air sous la tablette et donc sa stabilité. Le réglage de la pression est réalisé en ajustant la vitesse de rotation du ou des ventilateurs de soufflage ou par tous autres moyens permettant de régler le débit d'air sous la grille.

Dans ce cas, le flux d'air est préférentiellement contrôlé pour exercer sur le produit compacté une surpression ∆P telle que :

$$\Delta P \geq \frac{M * g}{S_P}$$

où $S_P$ est la surface du produit compacté projetée sur la grille.

De manière encore préférée, le flux d'air est contrôlé pour exercer sur le produit compacté une surpression ∆P telle que :

$$\Delta P \geq \frac{M * g}{S_C}$$

où $S_C$ est la surface du produit compacté en contact avec la grille en l'absence du flux d'air.

Dans ce cas, on peut assimiler la surpression ∆P à la différence entre la pression de l'air après les ventilateurs mais avant la grille, et la pression en aval de l'enceinte de traitement (c'est-à-dire après la tablette à traiter).

La grille de soufflage permet de répartir l'air sous la tablette. Elle est caractérisée par son taux de perforation, la taille des orifices de perforation, la distance entre chaque orifice.

De préférence, le taux de perforation varie de 15% à 50%, de préférence de 20% à 40%, c'est-à-dire que la surface des orifices représente 15% à 50%, de préférence 20% à 40%, de la surface de la grille de soufflage.

De préférence encore, le diamètre des ouvertures est compris entre 0,5 mm et 2 mm. La distance entre les orifices peut par exemple être comprise entre 1 mm et 2 mm

De préférence, la dimension de la grille est telle que la surface de portance de la pastille à traiter représente moins de 50% de la surface de la grille.

Selon un exemple de réalisation, une grille de soufflage utilisée a un taux de perforation de 26%, des trous de 0,8 mm de diamètre et une distance entre le centre de chaque trou de 1,5 mm.

De préférence, pour une meilleure stabilité de la pastille, les orifices de la grille sont ronds et disposés en quinconce c'est-à-dire que la distance entre le centre de chaque orifice est constante.

Par ailleurs, on utilise de préférence une grille ayant une forme adaptée à la forme de la tablette à traiter, afin de maximiser la surface de portance de la tablette par rapport à la grille. Cela permet en outre d'avoir un flux d'air appliqué uniformément sur la portion de la tablette qui est soumise au flux d'air direct.

Par exemple, pour une tablette ayant une forme de galet, avec une surface externe plane, on utilise de préférence une grille plane. Ce sera le cas par exemple pour un galet parfaitement cylindrique ou un galet avec des bords légèrement courbés.

Pour une tablette ayant une forme bombée, on utilise de préférence une grille étant également incurvée selon les courbures de la tablette.

Pour faciliter le maintien de la pastille en position centrée dans l'enceinte de traitement et améliorer la stabilité lors du déplacement, la grille peut être légèrement incurvée même lorsque l'on traite une pastille plane.

De préférence, on applique un flux d'air pour exercer sur le produit compacté une surpression ΔP telle que :

$$\Delta P \geq 1{,}2 * \frac{M * g}{S_C}$$

Selon encore un mode de réalisation préféré, le flux d'air est contrôlé pour exercer sur le produit compacté une surpression ΔP telle que :

$$\Delta P \leq 1{,}6 * \frac{M * g}{S_C}$$

Il peut par exemple être appliqué un flux d'air pour exercer sur le produit compacté une surpression ΔP telle que :

$$1{,}2 * \frac{M * g}{S_C} \leq \Delta P \leq 1{,}6 * \frac{M * g}{S_C}$$

**Etape d'humidification**

L'étape d'humidification est réalisée en sustentation en appliquant sur le produit compacté un flux d'air humide.

De préférence, notamment dans le domaine alimentaire, le flux d'air est également chaud, c'est-à-dire qu'il présente une température suffisante pour éviter les proliférations bactériennes.

Par « humidité relative » (HR), on entend le rapport de la pression partielle de vapeur d'eau dans l'air à la pression de vapeur saturante, à une température donnée. C'est une mesure du rapport entre la quantité de vapeur d'eau contenue dans l'air par rapport à sa capacité maximale à en contenir à une température donnée. Elle s'exprime en pourcentage (%).

Par « humidité absolue » (HA), on entend la teneur en eau de l'air. Elle s'exprime en gramme d'eau par kilogramme d'air sec (g/kg) ou en gramme par mètre cube d'air humide (g/m$^3$).

Par « point de rosée », on entend la température à laquelle l'air est saturé en eau pour une humidité absolue donnée.

Un flux d'air humide, et de préférence également chaud, est donc appliqué à l'ensemble de la tablette, de manière directe, ou de manière indirecte par l'intermédiaire de moyens de répartition d'air par exemple. Cela permet de créer une ambiance homogène qui assure un traitement homogène.

L'humidification de la surface de la tablette se fait principalement par un mécanisme de condensation de la vapeur d'eau (véhiculée par le flux d'air) en surface de la tablette. Ce phénomène se produit tant qu'il y a un écart de température entre la surface de la pastille et le point de rosée de l'air. Il n'y a en effet plus de condensation dès que la température de surface de la tablette a atteint la température correspondant au point de rosée de l'air humide soufflé (c'est-à-dire de l'ambiance humide formée).

De manière concomitante à ce premier phénomène de condensation, il existe également un mécanisme de diffusion de l'eau liquide depuis la surface externe de la tablette vers l'intérieur de la tablette, sur une faible épaisseur.

La première phase d'humidification de la tablette se fait donc essentiellement par condensation en surface, la quantité d'eau déposée sur la pastille étant essentiellement fonction de l'humidité absolue de l'air soufflé (concentration en eau de l'air) et de l'écart de température entre la pastille et le point de rosée, indépendamment de la température de l'air et du matériau de la tablette. Cela permet d'approximer pour un matériau donné la quantité d'eau qui sera déposée pour une valeur d'humidité absolue donnée.

La diffusion de l'eau se fait ensuite de l'épaisseur imbibée vers le coeur de la tablette. Ce phénomène de diffusion est lent par rapport par rapport au phénomène de condensation.

Pour des temps d'humidification supérieurs au temps de la phase de condensation, on ne peut plus s'affranchir de la nature du matériau à traiter. Des phénomènes spécifiques entrent en compte (solubilisation, réaction, viscosité, conductibilité thermique et perméabilité à l'eau du matériau...).

Un des avantages du procédé est qu'une fois que la température de surface de la pastille a atteint le point de rosée de l'air humide soufflé, même si la pastille est maintenue dans la zone chaude humide, la quantité d'eau déposée n'augmentera que faiblement et de façon ralentie car il n'y aura plus de condensation. Il y aura uniquement une lente diffusion de l'eau depuis la surface vers le coeur de la tablette.

Un tel processus d'humidification par application d'un air humide, où le flux d'air est contrôlé pour mettre la tablette à traiter en sustentation, est particulièrement avantageux puisque cela permet de déposer l'eau d'une manière très homogène sur toutes les faces de la tablette, quelles que soient leurs géométries.

Ce processus est également très avantageux notamment en comparaison des systèmes d'humidification par pulvérisation utilisant des jets d'eau. Par pulvérisation, il est très difficile d'avoir un dépôt d'eau homogène et donc une humidification tout aussi homogène. Par ailleurs, lorsque les tablettes ont des masses faibles, les jets d'eau peuvent déplacer les tablettes, entraînant une irrégularité de dépôt d'eau affectant le traitement recherché.

En outre, la mise en oeuvre de l'humidification en sustentation favorise l'homogénéité du dépôt d'eau. Elle évite en outre que la pastille soit marquée par un support, ce qui pourrait entrainer des changements de couleur de la tablette une fois humidifiée.

De préférence, l'étape d'humidification est réalisée dans un temps inférieur à 40 secondes, de préférence inférieur à 20 secondes, et plus préférentiellement encore inférieur à 15 secondes, généralement entre 5 secondes et 10 secondes.

Il est préférable que l'air soufflé ait une température suffisamment élevée pour inhiber toute prolifération bactérienne (par exemple supérieure à 45°C, voire supérieure à 65°C), en particulier dans le cas du traitement de produits alimentaires.

Le flux d'air pour l'humidification a de préférence une température comprise entre 40°C et 100°C, et de manière préférée comprise entre 60°C et 85°C.

L'humidité relative du flux d'air utilisé est de préférence comprise entre 40% et 100%, et de manière préférée comprise entre 50% et 80%. Utiliser un air avec une humidité relative inférieure à 80% à la température de travail permet notamment d'éviter des condensations parasites locales.

Le flux d'air pour l'humidification a de préférence une humidité absolue comprise entre 20 g/kg et 500 g/kg.

De manière préférée encore, l'air utilisé pour l'humidification a une humidité absolue comprise entre 50 g/kg et 300 g/kg pour obtenir une température de rosée supérieure à 40°C.

**Etape de séchage**

L'étape de séchage a lieu immédiatement après l'étape d'humidification.

C'est un processus continu où un flux d'air sous la pastille est maintenu en permanence entre la fin de l'humidification et le début du séchage. C'est pourquoi on parle d'un traitement continu et permanent, le flux d'air permettant notamment la mise en sustentation de la pastille n'étant jamais interrompu pendant l'ensemble du traitement, notamment entre l'humidification et le séchage.

Les caractéristiques du flux d'air sont contrôlées et donc modifiées pour permettre de passer d'une action d'humidification à une action de séchage, ce changement étant effectué rapidement, de préférence dans un temps inférieur à 10 secondes, de préférence encore dans un temps inférieur à 5 secondes, et encore plus préférentiellement dans un temps inférieur à 2 secondes.

Plus précisément, le flux d'air est contrôlé pour avoir une humidité absolue plus faible pendant l'étape de séchage que pendant l'étape d'humidification.

Par ailleurs, le flux d'air est de préférence contrôlé pour avoir une température plus importante ou égale pendant l'étape de séchage que pendant l'étape d'humidification. Cela permet d'augmenter la vitesse de séchage.

On pourrait toutefois sécher avec un flux d'air ayant une température inférieure à celle de la température de l'air pendant l'étape d'humidification si l'humidité absolue de l'air de séchage est plus faible que celle de l'air d'humidification.

Le flux d'air est également adapté pour maintenir la pastille en sustentation. Préférentiellement, le débit du ventilateur de soufflage est ajusté de manière à maintenir la pression de l'air constante sous la pastille.

L'étape de séchage a pour but d'éliminer l'eau ajoutée à l'étape d'humidification de manière à créer à la surface du produit une croute rigide et plus dense que le coeur qui n'a pas été humidifié.

De la même manière que pour l'étape d'humidification, le flux d'air en lui-même permet de réaliser le séchage de la tablette ayant été humidifiée. Il n'est pas nécessaire d'utiliser d'autres moyens de séchage.

Le séchage est réalisé par convection. Toutefois, la vitesse de séchage est d'autant plus rapide que l'écart entre la température de séchage et la température de la pastille est important et que l'humidité absolue de l'air de séchage est faible. Le choix de la température de séchage est fonction du matériau à traiter et de sa sensibilité à la température. En effet, il est préférable de choisir une température pour l'air de séchage inférieure au seuil de température au-delà de laquelle la pastille formée serait dégradée

De préférence, le flux d'air utilisé pour le séchage a une température comprise entre 50°C et 200°C, de manière préférée comprise entre 60°C et 180°C, et plus préférentiellement comprise entre 80°C et 160°C. Préférentiellement, on choisit la température de séchage la plus élevée mais sans provoquer de détérioration pour la pastille.

Un des avantages du procédé est que la température de surface de la tablette ne peut jamais dépasser la température de l'air de séchage. Ceci est une sécurité dans le cas où le traitement est réalisé sur des pastilles réactives à la température, sous réserve qu'on ne dépasse pas la température de décomposition d'un constituant réactif (par exemple pour une tablette de décoloration de cheveux).

Le temps de séchage est fonction :

- de la température de l'air soufflé pour le séchage ; et de l'écart de température entre l'air et la pastille ;
- de la quantité d'eau déposée lors de l'étape d'humidification ;
- du matériau à sécher.

**Etape de refroidissement**

Comme indiqué plus haut, de manière optionnelle, le procédé de traitement peut comporter une étape de refroidissement, effectuée également par mise en sustentation de la tablette.

L'objectif de cette étape est de ramener le produit compacté humidifié puis séché à une température plus faible que la température de séchage.

De préférence, on ramène le produit compacté à une température proche de la température ambiante, avant de l'emballer. Cela permet alors d'éviter de la condensation d'eau dans l'emballage.

Cela permet aussi d'éviter une altération du produit compacté traité. En effet, selon le matériau traité et la température de séchage, celui-ci peut présenter une surface ramollie. Ainsi, il peut y avoir une altération de la surface si le compact est repris en charge sur un convoyeur alors qu'il est encore chaud.

Le refroidissement peut être réalisé avec de l'air à température ambiante ou de l'air refroidi (c'est-à-dire ayant une température inférieure à la température ambiante) pour accélérer le processus.

Là encore, le flux d'air est adapté pour maintenir la pastille en sustentation. C'est-à-dire que le débit du ventilateur de soufflage est ajusté de manière à maintenir la pression constante sous la pastille.

**Dispositif de mise en oeuvre du procédé de traitement**

Il est proposé également un dispositif de traitement d'un produit compacté selon le processus de traitement par humidification puis séchage présenté ci-dessus.

De préférence, ce dispositif de traitement comprend :

- Une enceinte de traitement dans laquelle le produit compacté à traiter est destiné à être placé ;
- Un système d'application d'un flux d'air à l'intérieur de l'enceinte de traitement prévu pour diriger le flux d'air vers le produit compacté ;
- Un système de répartition du flux d'air sur l'ensemble de la surface du produit compacté, permettant de créer une ambiance homogène;
- Un système de modification de l'humidité absolue du flux d'air et un système de modification de la température du flux d'air.

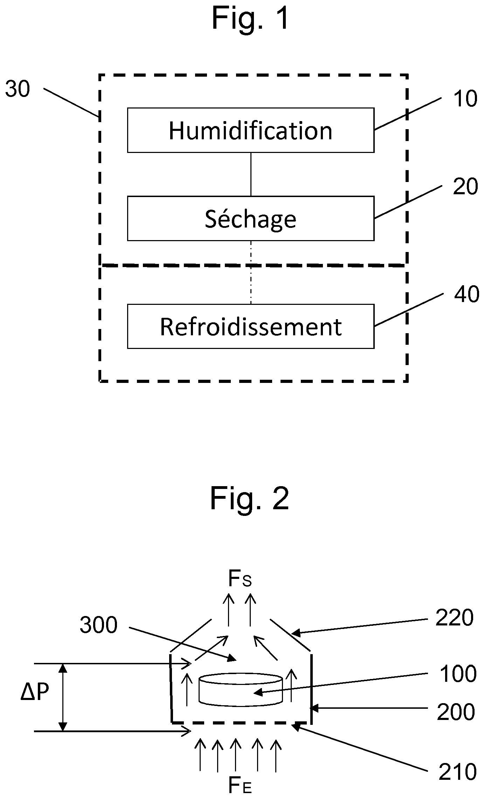

La figure 2 illustre un exemple de réalisation d'un tel dispositif de traitement de tablettes.

Il est prévu une enceinte de traitement 200 dans laquelle un produit compacté 100 est placé pour traitement. Une telle enceinte de traitement 200 est prévue pour permettre de réaliser à la fois l'étape d'humidification et celle de séchage. De manière préférée, l'enceinte de traitement permet également de réaliser l'étape de refroidissement.

Le système d'application du flux d'air est prévu pour mettre le produit compacté en sustentation. Par ailleurs, un tel système peut être contrôlé pour maintenir ledit produit compacté en sustentation.

Le système d'application du flux d'air peut comprendre, en entrée de l'enceinte 200, ici représentant le côté bas (inférieur) de l'enceinte, un ventilateur (non représenté) qui est associé à une grille perforée 210 pour générer le flux d'air $F_E$ (flux d'entrée) permettant de mettre en sustentation la tablette 100 dans l'enceinte 200.

Il est en outre prévu un système de contrôle (non représenté) des caractéristiques du flux d'air (notamment taux d'humidité, température, etc.) pour modifier le flux d'air en fonction de l'étape du traitement considéré.

Le système de répartition du flux d'air peut comprendre, du côté haut de l'enceinte, en partie supérieure, des convecteurs 220 qui permettent de confiner le flux d'air et le répartir sur la surface du produit compacté non directement atteint par le flux d'air. Ces convecteurs permettent de créer une zone 300 permettant une convection d'air vers la surface supérieure du produit compacté.

En partie supérieure de l'enceinte est également généralement prévue une sortie pour évacuer le flux d'air $F_S$

(flux de sortie).

Dans le cadre d'une fabrication en continu, afin d'assurer le déplacement des pastilles, celles-ci peuvent être disposées dans une goulotte équipée d'une grille de soufflage, les pastilles se déplaçant par glissement sans frottements dans cette goulotte. Il est à noter que la goulotte peut être formée d'une seule pièce ou d'un ensemble de pièces.

Cette goulotte peut être inclinée de manière à faire glisser les pastilles sur le coussin d'air créé par le flux d'air. Le déplacement est assuré par le seul effet de la pesanteur, et les pastilles sont uniformément accélérées quelque soit leur vitesse initiale.

La goulotte peut toutefois être agencée de sorte à être non inclinée, c'est-à-dire horizontale, la vitesse initiale des pastilles sortant de la presse rotative et entrant dans le système de traitement est alors conservée sur toute la longueur de la goulotte de traitement étant donné que celles-ci sont sur un coussin d'air et qu'il n'y a donc aucun frottement La longueur de la goulotte, l'angle d'inclinaison et la vitesse initiale des pastilles déterminent leur temps de séjour dans les différentes phases du système.

**Exemples de réalisation**

Produits et composition :

Les exemples de réalisation mise en oeuvre ont été effectués sur des tablettes de diverses compositions, notamment :

- Tablette « Café soluble », formée à partir de café soluble lyophilisé de marque « Nescafé® », type spécial filtre lyophilisé ;
- Tablette « Boisson café », formé à partir du mélange de café soluble, sucre, et creamer suivant :

  ○ 45% de creamer de marque « Nestlé coffee mate original® »
  ○ 45% de sucre en poudre
  ○ 10% de café soluble atomisé de marque « Nes® »

- Tablette « Lait » formée à partir de poudre de lait infantile 2$^{\text{ème}}$ âge avec les caractéristiques suivantes :

  ○ masse volumique de 0,44 g/cm$^3$
  ○ granulométrie centrée entre 100 μm et 400 μm
  ○ taux d'humidité relative de 2,6%.

- Tablette « Décolorant capillaire » présentant une granulométrie centrée entre 45 μm et 400 μm, et une température de décomposition du mélange de poudre de 160°C, avec la composition suivante :

  ○ persulfate de potassium : 55% en masse
  ○ persulfate d'ammonium : 13% en masse
  ○ acide éthylène diamine tetracetique : 1% en masse
  ○ metasilicate de sodium anhydre : 18% en masse
  ○ gomme xanthane : 2% en masse
  ○ lauryl sulfate de sodium en poudre : 1% en masse
  ○ cellulose : 6% en masse
  ○ sucre : 3% en masse

- Tablette « Soupe » présentant une granulométrie centrée entre 45 μm et 630 μm, et un taux d'humidité relative de 5,5%, avec la composition suivante :

  ○ soupe velouté légumes Royco : 70% en masse
  ○ dextrose : 10% en masse
  ○ amidon de pomme de terre : 10% en masse
  ○ poudre de tomate : 10% en masse

Mise en oeuvre :

*Préparation des tablettes*

La poudre est chargée dans une matrice et compactée à l'aide d'une presse uniaxiale fabriquée par Eurotab Technologie selon les caractéristiques décrites dans le Tableau 1 annexé.

Les caractéristiques des tablettes obtenues après compaction sont également données dans le Tableau 1 annexé.

La dureté diamétrale est mesurée sur un duromètre Dr Schleuniger. On applique une force diamétralement jusqu'à rupture du compact. Cette force de rupture est convertie en pression pour s'affranchir de la dimension des pastilles.

La résistance diamétrale est calculée par la formule : Rd (MPa) = 2*force rupture (en N) divisée par l'aire de la couronne sollicité (en $mm^2$).

La dissolution des pastilles est mesurée selon leur application. La ou les pastilles sont introduites dans un récipient dans lequel on verse de l'eau à une température fixée. Le milieu est agité manuellement avec une cuillère. Les conditions de test de dissolution sont précisées dans le Tableau 1.

*Traitement de surface*

Les tablettes ainsi préparées subissent ensuite un traitement de surface sans contact selon le procédé de l'invention de manière à améliorer leur résistance.

Les paramètres de sustentation et de traitement utilisés pour chaque phase sont précisés dans le Tableau 1 annexé.

Le traitement des pastilles est réalisé dans une chambre de traitement confinée équipée d'une grille de soufflage avec les caractéristiques suivantes : R0,8 T1,5.

C'est à dire qu'elle est constituée de trous ronds de diamètre 0,8 mm et la distance entre le centre de chaque trou est de 1,5 mm. Le taux d'ouverture de la grille est de 25,8%.

Un ventilateur alimente la chambre de traitement avec de l'air dont les caractéristiques sont précisées pour chaque phase de traitement dans le Tableau 1.

Enfin, les caractéristiques des tablettes obtenues selon le procédé de traitement sont données dans le Tableau 1 annexé. On constate donc que l'un des effets du procédé est d'améliorer la résistance mécanique des tablettes sans dégrader leur temps de dissolution. Par ailleurs, l'intégrité des pastilles n'est également pas dégradée.

Le lecteur aura compris que de nombreuses modifications peuvent être apportées sans sortir matériellement des nouveaux enseignements et des avantages décrits ici. Par conséquent, toutes les modifications de ce type sont destinées à être incorporées à l'intérieur de la portée du procédé de traitement de produit compacté présenté, et du dispositif de traitement associé.

*Tableau 1*

|  |  | E1 : café soluble | E2 : café soluble | E3 : décolorant | E4 : décolorant | E5 : boisson café | E6 : boisson café | E7 : lait | E8 : soupe |
|---|---|---|---|---|---|---|---|---|---|
| | **Produit** | | | | | | | | |
| Compression | vitesse de compression (mm/s) | 50 | 50 | 50 | 50 | 50 | 50 | 50 | 50 |
| | temps de maintien (ms) | 0 | 0 | 6000 | 6000 | 0 | 0 | 0 | 500 |
| Caractéristiques des pastilles avant traitement | Format | cylindrique | cylindrique | cylindrique | cylindrique | cylindrique | cylindrique | carré | cylindrique |
| | dimension (mm) | 25 | 25 | 32 | 32 | 45 | 45 | 25 | 45 |
| | masse (g) | 2 | 2 | 10 | 10 | 16 | 16 | 4,9 | 12,1 |
| | épaisseur (mm) | 7,1 | 7,1 | 7,5 | 7,5 | 12,7 | 12,7 | 11,2 | 7,5 |
| | densité (g/cm3) | 0,57 | 0,57 | 1,66 | 1,66 | 0,79 | 0,79 | 0,89 | 1.01 |
| | dureté diamétrale (N) | Non mesurable <10 | Non mesurable < 10 | 11 | 11 | Non mesurable < 10 | Non mesurable < 10 | 20 | 12 |
| | Résistance diamétrale (kPa) | <35,9 | < 35,9 | 29,2 | 29,2 | < 11 | <11 | 35,7 | 23 |
| | Volume d'eau test dissolution (mL) | 100 | 100 | 20 | 20 | 200 | 200 | 200 | 200 |
| | Température eau test dissolution (°C) | 85 | 85 | 20 | 20 | 85 | 85 | 70 | 85 |
| | Nombre pastilles test dissolution | 1 | 1 | 1 | 1 | 1 | 1 | 6 | 1 |
| | Temps de dissolution (s) | 20 | 20 | 70 | 70 | 25 | 25 | 40 | 90 |
| | surface de portance (mm$^2$) | 491 | 491 | 804 | 804 | 1590 | 1590 | 625 | 1590 |
| Conditions de sustentation | m*g/Sc (Pa) | 40 | 40 | 122 | 122 | 99 | 99 | 77 | 75 |
| | pression sustentation mesurée (Pa) | 64 | 64 | 160 | 160 | 126 | 126 | 101 | 101 |
| | ratio pression sustentation / (m*g/Sc) | 1,6 | 1,6 | 1,3 | 1,3 | 1,3 | 1,3 | 1,3 | 1,4 |

EP 2 938 200 B1

12

(suite)

| | Produit | E1 : café soluble | E2 : café soluble | E3 : décolorant | E4 : décolorant | E5 : boisson café | E6 : boisson café | E7 : lait | E8 : soupe |
|---|---|---|---|---|---|---|---|---|---|
| Humidification | température air (°C) | 69 | 75 | 75 | 69 | 69 | 80 | 75 | 80 |
| | humidité relative (%) | 65 | 75 | 65 | 65 | 65 | 50 | 62 | 80 |
| | humidité absolue (g/kg) | 147 | 250 | 205 | 147 | 147 | 191 | 191 | 370 |
| | temps Humidification (s) | 8 | 16 | 8 | 8 | 8 | 8 | 5 | 5 |
| | quantité eau déposée (mg) | 24 | 33 | 42 | 35 | 50 | 64 | 25 | 85 |
| | quantité eau déposée (mg/cm$^2$) | 1.6 | 2,1 | 1,8 | 1,5 | 1,0 | 1,3 | 1,1 | 1,9 |
| Séchage | température air séchage (°C) | 120 | 120 | 70 | 70 | 88 | 120 | 100 | 88 |
| | temps séchage (s) | 30 | 60 | 140 | 80 | 60 | 60 | 50 | 150 |
| Refroidissement | temps refroidissement avec un air à 25°C (s) | 0 | 0 | 30 | 30 | 0 | 0 | 0 | 0 |
| Caractéristiques du produit obtenu après traitement | aspect | pastilles manipulables sans endommagement et couleur homogène | | | | | | | |
| | dureté diamétrale (N) | 20 | 26 | 25 | 20 | 26 | 47 | 60 | 85 |
| | résistance diamétrale (kPa) | 72 | 93 | 66 | 53 | 29 | 54,5 | 107 | 160 |
| | Temps dissotution (s) (pour les mêmes conditions qu'avant traitement) | 20 | 20 | 70 | 70 | 25 | 25 | 40 | 90 |

**Revendications**

1. Procédé de traitement d'un produit compacté, comprenant les étapes suivantes :

   - Humidification (10) du produit compacté, puis
   - Séchage (20) du produit compacté humidifié,

   les étapes d'humidification (10) et de séchage (20) étant réalisées par application d'un flux d'air permanent et continu vers le produit compacté ayant été préalablement placé dans une enceinte de traitement, le flux d'air étant contrôlé au cours du traitement pour effectuer une humidification du produit compacté puis pour effectuer un séchage du produit compacté, le flux d'air étant en outre contrôlé pour mettre et maintenir le produit compacté en sustentation (30) dans l'enceinte de traitement pendant l'ensemble du traitement.

2. Procédé selon la revendication 1, dans lequel le flux d'air est contrôlé pour exercer sur le produit compacté une surpression $\Delta P$ telle que :

$$\Delta P \geq \frac{M * g}{S}$$

   où M est la masse du produit compacté, g est l'accélération de la pesanteur et S est la surface de portance du produit compacté par rapport au flux d'air.

3. Procédé selon la revendication 2, dans lequel le flux d'air est généré par soufflage d'air à travers des orifices d'une grille, le flux d'air étant contrôlé pour exercer sur le produit compacté une surpression $\Delta P$ telle que :

$$\Delta P \geq \frac{M * g}{S_P}$$

   où $S_P$ est la surface du produit compacté projetée sur la grille.

4. Procédé selon l'une quelconque des revendications 2 ou 3, dans lequel le flux d'air est généré par soufflage d'air à travers des orifices d'une grille, le flux d'air étant contrôlé pour exercer sur le produit compacté une surpression $\Delta P$ telle que :

$$\Delta P \geq \frac{M * g}{S_C}$$

   où $S_C$ est la surface du produit compacté en contact avec la grille en l'absence du flux d'air,
   le flux d'air étant de préférence contrôlé pour exercer sur le produit compacté une surpression $\Delta P$ telle
   $\Delta P \geq 1,2 * \frac{M*g}{S_C}$ , et de préférence encore une surpression $\Delta P$ telle que $1,2 * \frac{M*g}{S_C} \leq \Delta P \leq 1,6 * \frac{M*g}{S_C}$.

5. Procédé selon la revendication 4, dans lequel on utilise une grille ayant une forme adaptée à la forme du produit compacté.

6. Procédé selon l'une quelconque des revendications 1 à 5, dans lequel le flux d'air est réparti sur l'ensemble de la surface du produit compacté.

7. Procédé selon l'une quelconque des revendications 1 à 6, dans lequel le flux d'air est appliqué selon une unique direction d'application, et dans lequel on utilise des convecteurs d'air pour répartir le flux d'air vers la surface du produit compacté opposée à la direction d'application du flux d'air.

8. Procédé selon l'une quelconque des revendications 1 à 7, dans lequel l'humidification par flux d'air est effectuée par condensation de vapeur d'eau, et le séchage par flux d'air est effectué par convection.

9. Procédé selon l'une quelconque des revendications 1 à 8, dans lequel le flux d'air est contrôlé pour avoir une humidité absolue plus importante pendant l'étape d'humidification que pendant l'étape de séchage, et/ou pour avoir une température plus importante ou identique pendant l'étape de séchage que pendant l'étape d'humidification.

10. Procédé selon l'une quelconque des revendications 1 à 9, dans lequel, pendant l'étape d'humidification, le flux d'air a une humidité absolue comprise entre 20 g/kg et 500 g/kg, de préférence comprise entre 50 g/kg et 300 g/kg, et/ou le flux d'air a une température comprise entre 40°C et 100°C, de préférence comprise entre 60°C et 85°C, et/ou le flux d'air a un taux d'humidité relative compris entre 40% et 100%, de préférence compris entre 50% et 80%.

11. Procédé selon l'une quelconque des revendications 1 à 10, dans lequel, pendant l'étape de séchage, le flux d'air a une température comprise entre 50°C et 200°C, de préférence entre 60°C et 180°C, plus préférentiellement entre 80°C et 160°C.

12. Procédé selon l'une quelconque des revendications 1 à 11, comprenant en outre une étape de refroidissement après l'étape de séchage, le refroidissement étant effectué en maintenant l'application du flux d'air permettant de maintenir le produit compacté en sustentation dans l'enceinte de traitement, le flux d'air utilisé pendant l'étape de refroidissement ayant une température inférieure à la température du flux d'air pendant l'étape de séchage.

13. Dispositif de traitement d'un produit compacté (100) par humidification puis séchage, comprenant :

- Une enceinte de traitement (200) dans laquelle le produit compacté à traiter est destiné à être placé ;
- Un système d'application (210) d'un flux d'air à l'intérieur de l'enceinte de traitement prévu pour diriger le flux d'air vers le produit compacté (100) et pour mettre et maintenir en sustentation ledit produit compacté (100) ;
- un système de répartition (220) du flux d'air sur l'ensemble de la surface du produit compacté (100) ;
- un système de modification de l'humidité absolue du flux d'air et un système de modification de la température du flux d'air.

14. Dispositif selon la revendication 13, dans lequel le système d'application (210) du flux d'air comprend un ventilateur d'air associé à une grille comprenant une pluralité d'orifices de soufflage, les orifices de soufflage représentant 15% à 50% de la surface de la grille, et de préférence 20% à 40%.

15. Dispositif selon la revendication 14, dans lequel les orifices de soufflage ont un diamètre moyen compris entre 0,5 mm et 2 mm, la distance séparant deux orifices de soufflage adjacents étant comprise entre 1 mm et 2 mm.

**Patentansprüche**

1. Verfahren zur Verarbeitung eines gepressten Produkts, das die folgenden Schritte umfasst:

- Befeuchtung (10) des gepressten Produkts, und dann
- Trocknung (20) des befeuchteten gepressten Produkts,

wobei die Schritte zur Befeuchtung (10) und zur Trocknung (20) durch Anwendung eines permanenten und kontinuierlichen Luftstroms in Richtung des gepressten Produkts ausgeführt werden, das im Voraus in einem Verarbeitungsraum platziert wurde, wobei der Luftstrom während der Verarbeitung gesteuert wird, um eine Befeuchtung des gepressten Produkts durchzuführen, und dann, um ein Trocknen des gepressten Produkts durchzuführen, wobei der Luftstrom ferner gesteuert wird, um das gepresste Produkt während der gesamten Verarbeitung in dem Verarbeitungsraum ins/im Schweben (30) zu versetzen und zu halten.

2. Verfahren nach Anspruch 1, wobei der Luftstrom gesteuert wird, um auf das gepresste Produkt einen Überdruck ΔP auszuüben, der derart ist, dass:

$$\Delta P \geq \frac{M * g}{S}$$

wo M die Masse des gepressten Produkts ist, g die Fallbeschleunigung ist und S die Auftriebsfläche des gepressten Produkts in Bezug auf den Luftstrom ist.

3. Verfahren nach Anspruch 2, wobei der Luftstrom durch Blasen von Luft durch Öffnungen eines Gitters erzeugt wird, wobei der Luftstrom gesteuert wird, um auf das gepresste Produkt einen Überdruck ΔP auszuüben, der derart ist, dass:

$$\Delta P \geq \frac{M * g}{S_P}$$

wo $S_P$ die auf das Gitter projizierte Fläche des gepressten Produkts ist.

4. Verfahren nach einem der Ansprüche 2 oder 3, wobei der Luftstrom durch Blasen von Luft durch Öffnungen eines Gitters erzeugt wird, wobei der Luftstrom gesteuert wird, um auf das gepresste Produkt einen Überdruck ΔP auszuüben, der derart ist, dass:

$$\Delta P \geq \frac{M * g}{S_C}$$

wo $S_C$ die Fläche des gepressten Produkts im Kontakt mit dem Gitter bei Nichtvorhandensein des Luftstroms ist, wobei der Luftstrom vorzugsweise gesteuert wird, um auf das gepresste Produkt einen Überdruck ΔP, der derart ist, dass $\Delta P \geq 1{,}2 * \frac{M*g}{S_C}$, und vorzugsweise noch einen Überdruck ΔP auszuüben, der derart ist, dass

$$1{,}2 * \frac{M*g}{S_C} \leq \Delta P \leq 1{,}6 * \frac{M*g}{S_C}.$$

5. Verfahren nach Anspruch 4, wobei ein Gitter verwendet wird, das an die Form des gepressten Produkts angepasst ist.

6. Verfahren nach einem der Ansprüche 1 bis 5, wobei der Luftstrom über die gesamte Fläche des gepressten Produkts verteilt ist.

7. Verfahren nach einem der Ansprüche 1 bis 6, wobei der Luftstrom gemäß einer einzigen Anwendungsrichtung angewandt wird, und wobei Luftkonvektoren verwendet werden, um den Luftstrom in Richtung der Fläche des gepressten Produkts zu verteilen, die der Richtung der Anwendung des Luftstroms entgegengesetzt ist.

8. Verfahren nach einem der Ansprüche 1 bis 7, wobei die Befeuchtung durch den Luftstrom durch Wasserdampfkondensation durchgeführt wird, und die Trocknung durch den Luftstrom durch Konvektion durchgeführt wird.

9. Verfahren nach einem der Ansprüche 1 bis 8, wobei der Luftstrom gesteuert wird, um eine absolute Feuchtigkeit aufzuweisen, die während des Schritts der Befeuchtung höher ist als während des Schritts der Trocknung, und/oder um eine Temperatur aufzuweisen, die während des Schritts der Trocknung höher als diejenige während des Schrittes der Befeuchtung oder damit identisch ist.

10. Verfahren nach einem der Ansprüche 1 bis 9, wobei während des Schritts der Befeuchtung der Luftstrom eine absolute Feuchtigkeit aufweist, die zwischen 20 g/kg und 500 g/kg enthalten ist, vorzugsweise zwischen 50 g/kg und 300 g/kg enthalten ist, und/oder der Luftstrom eine Temperatur aufweist, die zwischen 40 °C und 100 °C enthalten ist, vorzugsweise zwischen 60 °C und 85 °C enthalten ist, und/oder der Luftstrom einen Feuchtigkeitsgrad aufweist, der zwischen 40 % und 100 % enthalten ist, vorzugsweise zwischen 50 % und 80 % enthalten ist.

11. Verfahren nach einem der Ansprüche 1 bis 10, wobei während des Schrittes der Trocknung der Luftstrom eine Temperatur aufweist, die zwischen 50 °C und 200 °C, vorzugsweise zwischen 60 °C und 180 °C, noch mehr zu bevorzugen zwischen 80 °C und 160 °C, enthalten ist.

12. Verfahren nach einem der Ansprüche 1 bis 11, das ferner nach dem Schritt der Trocknung einen Schritt zur Kühlung umfasst, wobei die Kühlung durch Halten der Anwendung des Luftstroms durchgeführt wird, der das Halten des gepressten Produkts im Schweben in dem Verarbeitungsraum ermöglicht, wobei der während des Schritts der Kühlung verwendete Luftstrom eine Temperatur aufweist, die niedriger ist als die Temperatur des Luftstroms während des Schritts der Trocknung.

**13.** Vorrichtung zur Verarbeitung eines gepressten Produkts (100) durch Befeuchtung und dann Trocknung, das Folgendes umfasst:

- einen Verarbeitungsraum (200), in dem das zu verarbeitende gepresste Produkt bestimmt ist, platziert zu werden;
- ein System (210) zur Anwendung eines Luftstroms im Inneren des Verarbeitungsraums, der vorgesehen ist, um den Luftstrom in Richtung des gepressten Produkts (100) zu richten und um das gepresste Produkt (100) ins/im Schweben zu versetzen und zu halten;
- ein System (220) zur Verteilung des Luftstroms über die gesamte Fläche des gepressten Produkts (100);
- ein System zur Änderung der absoluten Luftfeuchtigkeit des Luftstroms und ein System zur Änderung der Temperatur des Luftstroms.

**14.** Vorrichtung nach Anspruch 13, wobei das System (210) zur Anwendung des Luftstroms einen Luftventilator umfasst, der mit einem Gitter verbunden ist, das mehrere Blasöffnungen umfasst, wobei die Blasöffnungen 15 % bis 50 %, und vorzugsweise 20 % bis 40 % der Fläche des Gitters aufweisen.

**15.** Vorrichtung nach Anspruch 14, wobei die Blasöffnungen einen mittleren Durchmesser aufweisen, der zwischen 0,5 mm und 2 mm enthalten ist, wobei der Abstand, der zwei Blasöffnungen trennt, zwischen 1 mm und 2 mm enthalten ist.

**Claims**

**1.** A method for treating a compacted product, comprising the following steps:

- humidifying (10) the compacted product, and then
- drying (20) the humidified compacted product, the humidification (10) and drying (20) steps being carried out by applying a permanent and continuous airflow to the compacted product having been placed beforehand in a treatment enclosure, the airflow being controlled during the treatment in order to carry out humidification of the compacted product and then for carrying out drying of the compacted product, the airflow being further controlled for putting and maintaining the compacted product in sustentation (30) in the treatment enclosure during the whole treatment.

**2.** The method according to claim 1, wherein the airflow is controlled for exerting on the compacted product an overpressure $\Delta$P such that:

$$\Delta P \geq \frac{M * g}{S}$$

wherein M is the mass of the compacted product, g is the acceleration of gravity and S is the bearing surface of the compacted product relatively to the airflow.

**3.** The method according to claim 2, wherein the airflow is generated by blowing air through orifices of a grid, the airflow being controlled for exerting on the compacted product an overpressure $\Delta$P such that:

$$\Delta p \geq \frac{M * g}{S_P}$$

wherein $S_P$ is the surface area of the compacted product projected on the grid.

**4.** The method according to any one of claims 2 or 3, wherein the airflow is generated by blowing air through orifices of a grid, the airflow being controlled for exerting on the compacted product an overpressure $\Delta$P such that:

$$\Delta P \geq \frac{M * g}{S_C}$$

wherein $S_C$ is the surface area of the compacted product in contact with the grid in the absence of the airflow, the airflow being preferably controlled for exerting on the compacted product an overpressure $\Delta P$ such that

$$\Delta P \geq 1.2 * \frac{M*g}{S_C},$$ and more preferably an overpressure $\Delta P$ such that $$1.2 * \frac{M*g}{S_C} \leq \Delta P \leq 1.6 * \frac{M*g}{S_C}.$$

5. The method according to claim 4, wherein a grid is used having a shape adapted to the shape of the compacted product.

6. The method according to any one of claims 1 to 5, wherein the airflow is distributed over the whole surface area of the compacted product.

7. The method according to any one of claims 1 to 6, wherein the airflow is applied along a single application direction, and wherein air convectors are used for distributing the airflow towards the surface area of the compacted product opposite to the application direction of the airflow.

8. The method according to any one of claims 1 to 7, wherein the humidification by an airflow is carried out by condensation of steam, and the drying by an airflow is carried out by convection.

9. The method according to any one of claims 1 to 8, wherein the airflow is controlled in order to have a larger absolute humidity during the humidification step than during the drying step, and/or for having a higher or identical temperature during the drying step than during the humidification step.

10. The method according to any one of claims 1 to 9, wherein, during the humidification step, the airflow has an absolute humidity comprised between 20 g/kg and 500 g/kg, preferably comprised between 50 g/kg and 300 g/kg, and/or the airflow has a temperature comprised between 40 °C and 100 °C, preferably comprised between 60 °C and 85 °C, and/or the airflow has a relative humidity level comprised between 40 % and 100 %, preferably comprised between 50 % and 80 %.

11. The method according to any one of claims 1 to 10, wherein, during the drying step, the airflow has a temperature comprised between 50 °C and 200 °C, preferably between 60 °C and 180 °C, more preferentially between 80 °C and 160 °C.

12. The method according to any one of claims 1 to 11, further comprising a cooling step before the drying step, the cooling being carried out by maintaining the application of the airflow giving the possibility of maintaining the compacted product in sustentation in the treatment enclosure, the airflow used during the cooling step having a temperature lower than the temperature of the airflow during the drying step.

13. A device for treating a compacted product (100) by humidification and then drying, comprising:

- a treatment enclosure (200) in which the compacted product to be treated is intended to be placed;
- a system for applying (210) an airflow inside the treatment enclosure provided for directing the airflow towards the compacted product (100) and for putting and maintaining said compacted product (100) in sustentation;
- a system for distributing (220) the airflow over the whole surface area of the compacted product (100);
- a system for modifying the absolute humidity of the airflow and a system for modifying the temperature of the airflow.

14. The device according to claim 13, wherein the system (210) for applying the airflow comprises an air fan associated with a grid comprising a plurality of blowing orifices, the blowing orifices representing 15 % to 50 % of the surface area of the grid, and preferably 20 % to 40 %.

15. The device according to claim 14, wherein the blowing orifices have an average diameter comprised between 0.5 mm and 2 mm, the distance separating two adjacent blowing orifices being comprised between 1 mm and 2 mm.

# Fig. 1

30

10
Humidification

20
Séchage

40
Refroidissement

# Fig. 2

$F_S$

300

220

100

200

$\Delta P$

210

$F_E$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2012110742 A
- US 2897084 A
- EP 1769682 A1